Europäisches Patentamt

European Patent Office

Office européen des brevets

(11) Publication number: **0 081 330**
**A2**

(12) **EUROPEAN PATENT APPLICATION**

(21) Application number: **82306333.4**

(22) Date of filing: **29.11.82**

(51) Int. Cl.³: **B 01 D 46/52**
**F 02 M 35/024**

(30) Priority: **09.12.81 GB 8137091**

(43) Date of publication of application:
**15.06.83 Bulletin 83/24**

(84) Designated Contracting States:
**BE DE FR IT NL SE**

(71) Applicant: **Fram Europe Limited**
**Llantrisant Pontyclun**
**Mid Glamorgan CF7 8YU(GB)**

(72) Inventor: **Jones, Emlyn John**
**Frame Europe Limited Llantrisant**
**Pontyclun Glamorgan Wales(GB)**

(74) Representative: **Turner, Alan Reginald**
**c/o Bendix Limited Douglas Road**
**Kingswood, Bristol BS15 2NL(GB)**

(54) **Filter assemblies.**

(57) An induction air filter assembly for an internal combustion engine of a vehicle has a cylindrical or flat-pack pleated paper filter element (1: 21) held against a one piece mould tray by a dirty-side closure member on one side a cleanside closure member being provided on the other side and inlet and outlet ports (12, 15: 28,29) being provided in the moulding to appear on the periphery of the assembly.

FIG.2

EP 0 081 330 A2

0081330

Filter Assemblies

This invention relates to filter assemblies and relates especially, but not exclusively, to air filter assemblies for internal combustion engines.

In automobiles fitted with internal combustion engines it has been common practice to mount air filters for induction air actually upon or at least directly above or adjacent to the carburettor or induction air intake for the engine. As a result of recent developments leading towards higher performance engines, these are being designed smaller, but run at higher temperatures, for given power outputs and also are required to give greater mileage intervals between service replacements. This all means that air filters tend to be increasingly bulky in relation to the size of the actual engine, furthermore, the tendency of vehicle body design, towards lower bonnets is such as to reduce the available space in engine compartments and more attention has to be paid to the effect of heat on moulded plastics used for air filter housings.

The object of the present invention is to provide an economical filter assembly which can be readily mounted at a cooler and more convenient location than hitherto.

According to the invention there is provided a filter assembly having a housing, a dirty-side input port (12: 28) and a clean side output port (15: 29) and a filter element (1: 21) with peripheral sealing means (6: 24) engageable with the housing between the input and output ports characterised by the housing comprising

**0081330**

a tray portion (8: 40) having an aperture (7: 38) adapted to sealingly receive the filter element (1: 21) across it the tray portion extending laterally of the aperture to incorporate said ports and partition between the dirty-side and the clean-side said ports being thereby located in the peripheral wall of the assembly and clean side housing closure means (17: 31) and dirty side housing closure means (11: 30).

The filter element may comprise a cylindrical filter element one end of which is open to co-operate with said aperture.

Alternatively, the filter element may comprise a flat filter element with sealing means around the periphery thereof to co-operate with the said aperture.

By virtue of the filter assembly enabling output generally in the same plane or the same outer surface of the assembly, input and output ducts can conveniently be connected whilst requiring the minimum of space to accomodate the whole assembly.

In order that the invention may be more clearly understood and readily carried into effect, the same will be further described by way of example, with reference to the accompanying drawings of which:

Fig. 1 is a plan view of part of a filter assembly in accordance with one example of the invention,

Fig. 2 illustrates a sectional view of a filter

Fig. 2 (contd.)

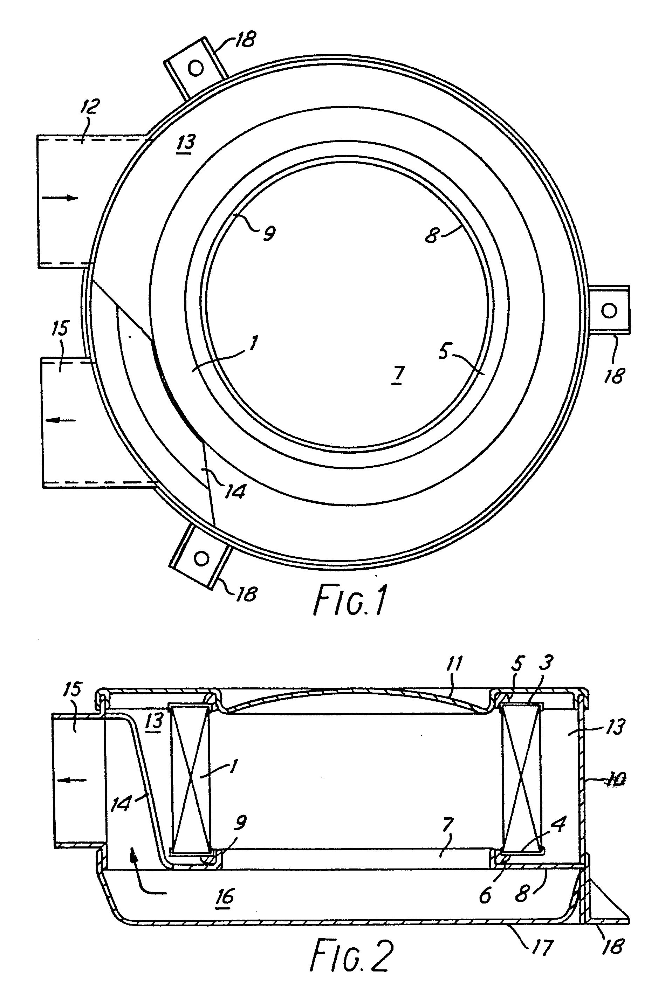

assembly the plan view part of which is shown in Fig. 1.

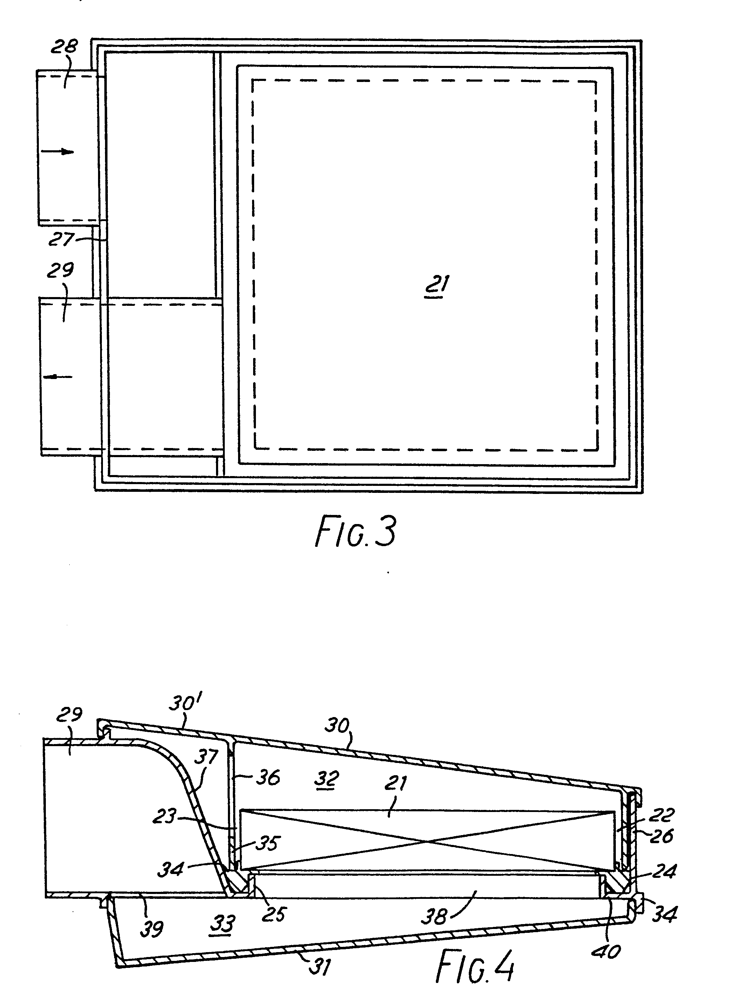

Fig. 3 illustrates a plan view of part of another filter assembly in accordance with the invention and,

Fig. 4 illustrates a sectional view through the filter assembly part of which is shown in plan in Fig.3.

Referring to Fig. 1 and Fig. 2, a cylindrical filter element of generally known form is indicated by reference 1, this filter element is formed of multi-pleated paper the upper and lower edges 3 and 4 of the pleats being sealed into a resilient sealing material moulded to provide resilient seals at 5 and 6. The filter is entirely symmetrical end for end and one end is arranged to rest across an aperture 7 of a one-piece moulded tray portion 8, the aperture 7 being provided with an annular upstand 9 for positive location of the end of the filter. The moulded tray is provided with an outer peripheral upstand 10 which surrounds the filter element to constitute the peripheral wall thereof. Located sealingly against the upper edge of 10 and the upper end seal 5 of the filter element is a dirty-side closure cap 11. This closure cap is arranged to be detachable to release the filter element and to provide access to the interior of the housing for replacing the filter element.

As seen in Fig. 1, a tubular input port spigot 12 is moulded into the upstand 10 to provide a dirty-air duct into the region 13 which surrounds the filter element 1. Also moulded integrally with the tray there is provided an inner partition 14 which divides off the dirty-side input chamber 13 from a clean-side output port spigot 15 which is also moulded into the peripheral upstand 10 of the tray adjacent to the port 12. Closure means for the clean-side output chamber 16 of the assembly is provided by a shaped base plate 17 which is provided with three mounting brackets 18 for the assembly. Again, the periphery of the base plate 17 is sealingly engaged with periphery 10 at the opposite end to the closure plate 11.

In order to economise on space and provide for a desirable distribution of air flow around the whole surface of the cylindrical filter 1, it will be seen that the aperture 7 is offset from the centre of the overall assembly whereby the width of the dirty-side input chamber progressively reduces moving away from the input port 12. The closure member 11, the tray 10 and the base plate 17 may be clamped together by any suitable means such as by means of a screw stud or bolt passing centrally through the closure member 11 and engaging with plate 17.

In operation of the filter assembly, the port spigot 12 is connected to a suitable air gathering duct for the internal combustion engine and clean-side port spigot connected to the engine induction via a duct, so that the filter assembly may be located at any position which is convenient within the body of the vehicle. Air drawn via tubular port spigot 12 passes into the dirty-side input chamber 13 and is filtered radially inwardly of the cylindrical filter element 1 to pass down through the aperture 7 into the one-piece tray into the region 16 from whence it is drawn via the tubular clean-air spigot 15 into the engine. Replacement of a filter element such as 1 at suitable service intervals is easily effected by removal of the closure member 11 and without disturbing any seals associated with the clean side output chamber other than the seal provided by the end 6 of the filter which is to be disposed of and replaced.

Referring to Fig. 3 and Fig. 4 the filter assembly shown therein is adapted to receive a flat-pack type of pleated paper or other filter element 21. Such flat-pack filter elements are usually square or rectangular in configuration and in the present example, the filter is a pleated paper filter sealed across the edges 22 and 23 of the pleats and provided with an all round resilient moulded seal 24 for engagement with one side of an aperture 38 of a one-piece moulded tray 40. An upstand 25 is provided around the aperture 23 for locating the filter element 21. The one-piece moulded tray is provided with a further upstand 26 to provide a generally rectangular surround for the filter assembly. The ends of the assembly are rectangular and the sides are quadrilateral. The end 27 of the assembly of greater height has a moulded-in dirty air input spigot 28 and a moulded-in clean air output spigot 29. Respective closure members 30 and 31 are provided to enclose a dirty-side input chamber 32 and a clean-side output chamber 33. Whilst the output chamber closure member 31 seals around a

**0081330**

lower edge 34 of the tray, the closure member 30 is arranged to be detachable to provide access to the interior of the housing for replacing the filter element and has a downwardly projecting skirt 35 which engages with the upper surface 36 of the moulded seal 24 and thereby seals to and positively positions the filter element. The skirt 35 is provided with apertures 36 to give access from the dirty-side input duct 28. As in the case of the assembly of Figs. 1 and 2, in this assembly also the dirty-side input chamber 32 is divided off from the clean-side output chamber 33 by a moulded-in partition 37 located over an access aperture 39 between the input duct 29 and the clean region 33 below the filter element 21.

The filter assembly is adapted to operate substantially the same way as that of Figs. 1 and 2 and can be located at any convenient position on a vehicle. Again, filter element replacement is readily effected by removal of the closure member 30 which thereby reveals the filter element 21 for replacement without disturbing other clean-side seals apart from that around the member 30.

Whilst in the embodiments described in the foregoing, the input and output spigots are arranged side by side and their centres are substantially coplanar in relation to each other and the filter element, it may be desirable for these ducts to be located to be accessible from directions which are other than mutually parallel directions. It will be readily apparent that the dirty air input duct might be moved, for the sake of another specific example, to a position which is diametrically opposite the output duct in the peripheral upstand of the one-piece tray or, alternatively, it may, of course, be located at any suitable or desired intermediate position in the upstand.

In the case of such variant on the arrangement of Figs. 1 and 2, it may be convenient to rearrange the centring of the aperture 7 to achieve the optimum flow distribution through the filter element 1. Furthermore, in the case of the arrangement of Figs. 3 and 4, it may be desirable to modify the spaces between the respective outer walls of the assembly and the upper and lower surfaces of the filter element 21 in order to similarly achieve desirable flow distribution across the filter element 21.

One attractive attribute of a filter assembly in accordance with the invention is that in one embodiment it is designed such that a part of its housing is incorporated into a panel or other component of the vehicle. Thus the clean side closure member 17 of the assembly of Figs. 1 and 2 or the clean-side closure member 31 of the assembly of Figs. 3 and 4 is formed as part of a bulk head or internal body pressing of the vehicle. The need for additional mounting brackets such as 18 for Fig. 2 may thereby be avoided in addition to other obvious savings in materials cost. In alternative but less attractive embodiments the moulded tray or the dirty-side closure member could be incorporated as part of such a body pressing.

Although in the filter assembly of Figs. 1 and 2 or of Figs.

3 and 4 the inlet port and the outlet port are each arranged to be accomodated in the peripheral wall of the housing it will be understood that if it is desirable for the purposes of installation of the filter, the dirty side inlet port may be accomodated in the dirty side closure member 11 of Fig. 2 or 30 of Fig. 4 as the case may be. In the case of Fig. 4 moreover, the inlet port may be accomodated in the part 30'of the dirty side closure only the main port 30 being required to be detachable for access to the filter element.

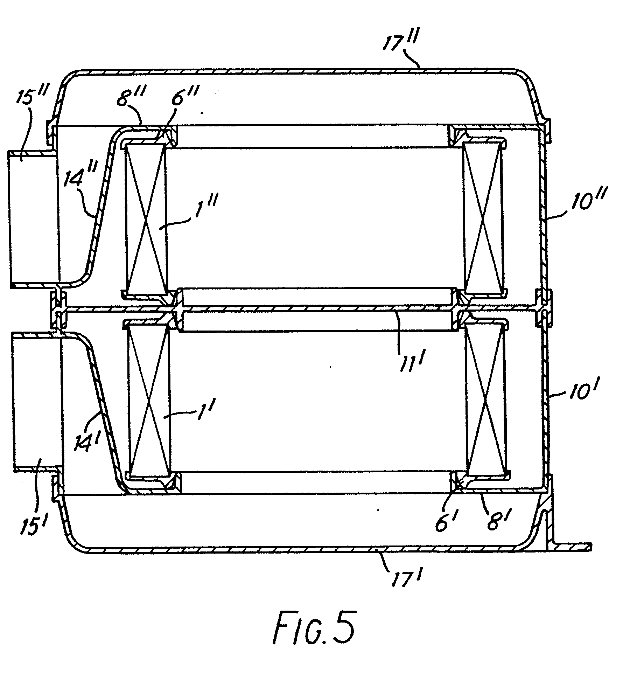

In some installations such as engines with two carburettors it may be desirable to provide a separate remote filter for each carburettor. Fig. 5 illustrates a compact adaptation of the filter assembly of Figs. 1 and 2 for such a twin installation.

Referring to Fig. 5, the first filter element is denoted by reference 1' and it will be readily observed that with the exception of part II the one-piece moulded tray and the clean-side closure member 17' are substantially identical to the corresponding parts of Fig. 2. The dirty-side closure member 11 is replaced by a common double sided dirty-side closure member 11' which serves both the housing of filter element 1' and a similar inverted housing for a second separate filter element 1". The ports visible in Fig. 5 are the clean-side outlet ports 15' and 15" for the two filters and it will be appreciated that since the moulded tray portion of the upper and lower housings are the same the respective dirty-side inlets that are not visible in Fig. 5 are displaced respectively clockwise and anti-clockwise in relation to the outlet ports. It is also necessary to allow for mutual displacement of the centres of the upper and lower filter elements 1' and 1". If, however, the inlet ports and the outlet ports are required to be respectively mutually in line the upper and lower moulded trays 8' and 8" would need to be moulded accordingly.

Access to the two filter elements 1' and 1" for replacement is achieved by separation on both sides of the common closure member 11'.

A filter assembly such as described above with reference to Fig. 5, would, of course, also be beneficial in any installation where in addition to a single filter air induction for an internal combustion engine a further independent filtered air source was required.

In each of the embodiments described it is envisaged that the one-piece moulded tray would be formed of moulded plastics and the clean-side and dirty-side closure members are either pressed metal or moulded plastics. In either case, the closure members are fitted to the moulded tray by suitable screws or well known snap fit arrangements. The dirty-side closure members 11 and 30 however are preferably fitted by clips which are readily releasable for gaining access to the interior for filter element replacement at regular service intervals.

CLAIMS

1. A filter assembly having a housing, a dirty-side input port (12 : 28) and a clean-side output port (15 :29) and a filter element (1 :21) with peripheral sealing means (6 : 24) engageable with the housing between the input and output ports characterised by the housing comprising a tray portion (8 : 40)having an aperture (7 :38) adapted to sealingly receive the filter element (1 : 21) across it the tray portion extending laterally of the aperture to accomodate said output port and a partition between the dirty-side and the clean-side said output port being thereby located in the peripheral wall of the assembly and clean-side housing closure means (17 : 31) and dirty-side housing closure means (1ʒ : 30).

2.   A filter assembly as claimed in claim 1, characterised by said input port also being accommodated in the peripheral wall.

3.   A filter assembly as claimed in claim 1 or 2 characterised by said dirty-side closure means (11 : 30) being detachable to provide access to the interior of the housing for replacing the filter element.

4.   A filter assembly as claimed in claim 3 or characterised by the filter element being a cylindrical element (1) with an opening at either end, one end being sealingly engageable with said aperture and the other end being sealingly engageable with the respective closure means.

5.   A filter assembly as claimed in claim 4 characterised
by the housing also being generally cylindrical and the
central axis of the filter element being displaced from
the central areas of the housing to optimise the distribution
of flow over the surface area of the filter.

6.   A filter assembly as claimed in claim 3 characterised
by the filter element being a flat filter element (21)
and respective closure means (30) having means (35) being
engageable with the peripheral sealing means (24) thereof .

7.   A filter assembly as claimed in claim 1, 2, 3, 4, 5
or 6 characterised by the tray comprising a one-piece
moulding.

8.   A filter assembly as claimed in claim 1, 2, 3, 4, 5, 6
or 7 characterised by a part (17:31) of the assembly being
provided by appropriate design of a component part of the
vehicle.

9.   A filter assembly as claimed in claim 1, 2, 3, 4, 5,
6, 7 or 8 characterised by including a further such filter
assembly and the two assemblies having a common dirty-side
closure member 11 the filter elements 1' and 1" being arranged
on opposite sides of the common closure member.

10.   A filter assembly substantially as described herein
with reference to Figs. 1 and 2 or Figs. 3 and 4 of the
accompanying drawings.

FIG.1

FIG.2

28

27

29

21

*Fig.3*

29

30'

30

37

36

32

21

23

35

34

22

26

25

24

39

33

38

34

31

40

*Fig.4*

FIG.5